# EUROPEAN PATENT APPLICATION

(11) **EP 2 426 358 A2**
(43) Date of publication of application: **07.03.2012**
(21) Application number: 11006755.0
(22) Date of filing: 18.08.2011
(51) Int. Cl.: F04B 27/18

(54) **Variable displacement compressor control valve**

(30) Priority: 06.09.2010 JP 2010199253; 18.03.2011 JP 2011061327; 22.07.2011 JP 2011161121
(71) Applicant: Fujikoki Corporation, Tokyo 158-0082 (JP)
(72) Inventor: Tano, Shintaro, Tokyo 158-0082 (JP); Kume, Yoshiyuki, Tokyo 158-0082 (JP)
(74) Representative: Gleiss, Alf-Olav

(57) **Abstract**

A variable displacement compressor control valve is provided, which can reduce a time required until a discharge capacity becomes large at a time of actuation of a compressor without reducing an operation efficiency of the compressor. An in-valve release passage 16 for releasing a crank chamber pressure Pc to a suction chamber of the compressor through a Ps inlet/outlet port 27 is provided, a sub valve element 17 which opens and closes the in-valve release passage 16 is provided, and under a situation in which a valve port 22 is closed by a main valve element 15, two forces that are a force corresponding to a suction pressure Ps (contraction force of a bellows device 40) and a force corresponding to a differential pressure of the crank chamber pressure Pc and the suction pressure Ps act on the sub valve element 17 in a direction to open the in-valve release passage 16.

## Description

### BACKGROUND OF THE INVENTION

### Field of the Invention

The present invention relates to a variable displacement compressor control valve for use in an automotive air conditioner or the like, and particularly relates to a variable displacement compressor control valve which can quickly increase a discharge capacity at a time of actuation of a compressor without reducing an operation efficiency of the compressor.

### Background Art

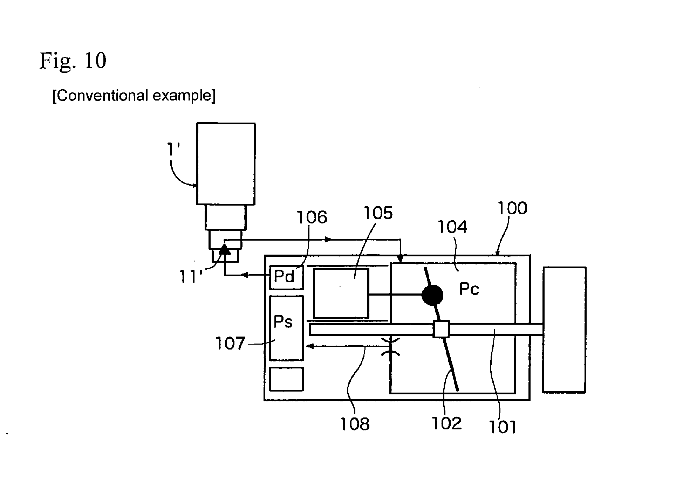

Conventionally, as an automotive air conditioner, a swash plate type variable displacement compressor as schematically illustrated in FIG. 10 has been used. A swash plate type variable displacement compressor 100 has a rotating shaft 101 which is rotationally driven by an on-vehicle engine, a swash plate 102 which is attached to the rotating shaft 101, a crank chamber 104 in which the swash plate 102 is placed, a piston 105 which is reciprocated by the aforesaid swash plate 102, a discharge chamber 106 for discharging a refrigerant compressed by the piston 105, a suction chamber 107 for sucking the refrigerant, an in-compressor release passage (fixed orifice) 108 for releasing a pressure Pc of the crank chamber 104 to the suction chamber 107, and the like.

Meanwhile, a control valve 1' which is used in the above described variable displacement compressor has a discharge pressure Pd introduced therein from the discharge chamber 106 of the compressor 100, controls the pressure Pc of the crank chamber 104 by performing pressure control of the discharge pressure Pd in accordance with a suction pressure Ps of the compressor 100. As a basic configuration, the control valve 1' includes a valve main body which has a valve chamber provided with a valve port and a Ps inlet/outlet port which communicates with the suction chamber 107 of the compressor 100, is provided with a Pd introduction port which communicates with the discharge chamber 106 of the compressor 100 at an upstream side of the aforesaid valve port, and is provided with a Pc inlet/outlet port which communicates with the crank chamber 104 of the aforesaid compressor 100 at a downstream side from the aforesaid valve port, a valve element (valve stem) for opening and closing the aforesaid valve port, an electromagnetic actuator having a plunger for moving the valve element in a valve port opening and closing direction, a pressure-sensitive chamber in which the suction pressure Ps is introduced from the aforesaid compressor 100 via the aforesaid Ps inlet/outlet port, and a pressure-sensitive reaction member which urges the aforesaid valve element in the valve port opening and closing direction in accordance with the pressure of the pressure-sensitive chamber, and a valve unit designated by reference numeral 11' in FIG. 10 is constructed by the aforesaid valve element and the aforesaid valve port (for example, see JP Patent Publication (Kokai) No. 2010-185285 (Laid-Open on August 26, 2010)).

When a solenoid unit constituted of a coil, a stator, an attractor of an electromagnetic actuator and the like is energized in the control valve 1' with such a configuration, the plunger is attracted to the attractor, and with this, the valve element is moved in a valve closing direction to follow the plunger by the urging force of a valve closing spring. Meanwhile, the suction pressure Ps which is introduced from the compressor 100 through the Ps introduction port is introduced into the pressure-sensitive chamber from the introduction chamber through a gap formed between the plunger and a guide pipe placed in an outer periphery of the plunger, and the like, the pressure-sensitive reaction member (for example, a bellows device) expansively and contractively displaces (contracts if the suction pressure Ps is high, and expands if it is low) in accordance with the pressure of the pressure-sensitive chamber (suction pressure Ps), and the displacement (urging force) is transmitted to the valve element, whereby the valve element section ascends and descends with respect to the valve port to regulate the valve opening of the valve unit 11'. More specifically, the valve opening is determined by the suction force of the plunger by the suction element, the urging force by the expansive and contractive displacement of the pressure-sensitive reaction member, and the urging force by the plunger spring (valve opening spring) and the valve closing spring, and the pressure Pc of the crank chamber 104 is controlled in accordance with the valve opening.

In this case, if the pressure Pc of the crank chamber 104 is high, the swash plate 102 is difficult to incline, the stroke of the piston 105 becomes short, and the discharge pressure Pd is difficult to increase, whereby the time required before the discharge capacity becomes large becomes long at the time of actuation of the compressor. In reverse, if the pressure Pc of the crank chamber 104 is low, the swash plate 102 is easily inclined, the stroke of the piston 105 becomes long, and the discharge pressure Pd is easily increased, whereby the time required before the discharge capacity becomes large becomes short at the time of actuation of the compressor.

### SUMMARY OF THE INVENTION

As described above, in the compressor 100 and the control valve 1', the refrigerant is liquefied and accumulates in the crank chamber 104 if the compressor is kept stopping for a long time, and if the compressor is actuated from this state, the liquid refrigerant in the crank chamber 104 is vaporized and expanded due to a temperature rise and the pressure Pc in the crank chamber 104 is significantly increased. In this case, the pressure Pc of the crank chamber 104 escapes to the suction chamber 107 through the in-compressor release passage 108, but if the pressure Pc of the crank chamber 104 is excessively high, the pressure Pc of the crank chamber 104 does not quickly escape to the suction chamber 107 through only the in-compressor release passage 108, and the pressure Pc does not immediately decrease. Therefore, a long time is required until the discharge capacity becomes large at the time of actuation of the compressor, as a result of which, much time is taken before air-conditioning becomes effective, for example, and there is the fear that an occupant or the like is irritated and wonders if the air-conditioner fails.

If the effective passage sectional area of the in-compressor release passage 108 (hole diameter of the fixed orifice) is set to be large in order to solve the above problem, the pressure Pc of the crank chamber 104 is quickly reduced at the time of actuation of the compressor, but the operation efficiency of the compressor is reduced.

Furthermore, if the crank chamber pressure Pc is released to the suction chamber through the Ps inlet/outlet port in the control valve at the time of stopping the energization (OFF) to the solenoid unit of the electromagnetic actuator, apart from the above description, the crank chamber pressure Pc cannot be quickly raised to a predetermined pressure and stabilized, and there arises the problem of being incapable of keeping the energization stopping (OFF) state.

The present invention is made in view of the above described circumstances, and an object of the present invention is to provide a variable displacement compressor control valve which can shorten a time required before a discharge capacity becomes large at a time of actuation of a compressor, and can prevent a pressure Pc of a crank chamber from escaping to a Ps inlet/outlet port side at a time of stopping energization to an electromagnetic actuator, without reducing an operation efficiency of the compressor.

In order to attain the aforementioned object, a first variable displacement compressor control valve according to the present invention basically includes a valve main body which has a valve chamber provided with a valve port and a Ps inlet/outlet port communicating with a suction chamber of a compressor, is provided with a Pd introduction port communicating with a discharge chamber of the compressor at an upstream side from the valve port, and is provided with a Pc delivery port communicating with a crank chamber of the compressor at a downstream side from the valve port, a main valve element for opening and closing the valve port, an electromagnetic actuator having a plunger for moving the main valve element in a valve port opening/closing direction, a pressure-sensitive chamber into which a suction pressure Ps is introduced from the compressor through the Ps inlet/outlet port, and a pressure-sensitive reaction member which urges the main valve element in the valve port opening/closing direction in accordance with a pressure of the pressure-sensitive chamber, wherein an in-valve release passage for releasing a pressure Pc of the crank chamber to a suction chamber of the compressor through the Ps inlet/outlet port is provided, and a sub valve element which opens and closes the in-valve release passage is provided, and wherein under a situation in which the valve port is closed by the main valve element, two forces that are a force corresponding to the suction pressure Ps and a force corresponding to a differential pressure between the crank chamber pressure Pc and the suction pressure Ps act on the sub valve element in a direction to open the in-valve release passage.

In a preferable mode, in the main valve element, the in-valve release passage is formed, and a sub valve element portion of the sub valve element is inserted.

In another preferable mode, the valve main body is provided with a guide hole in which the main valve element is slidably fitted and inserted, the Pc delivery port is provided between the guide hole and the valve port, and the Ps inlet/outlet port is provided at an upper side of the guide hole.

A second variable displacement compressor control valve according to the present invention includes a valve main body which has a valve chamber provided with a valve port and a Ps inlet/outlet port communicating with a suction chamber of a compressor, is provided with a Pd introduction port communicating with a discharge chamber of the compressor at an upstream side from the valve port, and is provided with a Pc inlet/outlet port communicating with a crank chamber of the compressor at a downstream side from the valve port, a main valve element for opening and closing the valve port, an electromagnetic actuator having a plunger for moving the main valve element in a valve port opening/closing direction, a pressure-sensitive chamber into which a suction pressure Ps is introduced from the compressor through the Ps inlet/outlet port, and a pressure-sensitive reaction member which urges the main valve element in the valve port opening/closing direction in accordance with a pressure of the pressure-sensitive chamber, wherein an in-valve release passage for releasing a pressure Pc of the crank chamber to a suction chamber of the compressor through the Ps inlet/outlet port when the electromagnetic actuator is energized, and the valve port is closed by the main valve element, is provided, and the in-valve release passage is constructed by including an inside of the main valve element, an inside of the plunger, and a gap formed between a bottom surface of the plunger and a stopper surface provided at the valve main body, and at a time of stopping energization to the electromagnetic actuator, the in-valve release passage is blocked by pressing the bottom surface of the plunger against the stopper surface.

The in-valve release passage is preferably constructed by including a vertical groove formed in an outer peripheral portion of the plunger.

In another preferable mode, a sub valve element for opening and closing the in-valve release passage in the main valve element is provided, and when the valve port is closed by the main valve element, two forces that are a force corresponding to the suction pressure Ps and a force corresponding to a differential pressure between the crank chamber pressure Pc and the suction pressure Ps act on the sub valve element in a direction to open the in-valve release passage.

In another preferable mode, the valve main body is provided with a guide hole in which the main valve element is slidably fitted and inserted, the Pc inlet/outlet port is provided between the guide hole and the valve port, and the Ps inlet/outlet port is provided at an upper side of the guide hole.

In each of the first and the second variable displacement compressor control valves, a cancel passage which applies a refrigerant pressure to the main valve element can be provided to substantially cancel out refrigerant pressures that act on the main valve element in a valve closing direction and a valve opening direction.

In this case, the cancel passage can include an in-valve cancel passage which is formed in the main valve element, opens at an end surface at an upstream side from the valve port in the main valve element and communicates with the Pc delivery port, and a pressure chamber which is opposed to the end surface of the main valve element and communicates with the in-valve cancel passage.

In this case, the in-valve release passage and the in-valve cancel passage which are formed in the main valve element are preferably formed by one through hole which penetrates through the main valve element.

In the preferable mode of the variable displacement compressor control valve according to the present invention, the crank chamber pressure Pc is released to the suction chamber through the two passages that are the in-compressor release passage and the in-valve release passage at the time of actuation of the compressor, and therefore, the time required until the discharge capacity becomes large at the time of actuation of the compressor can be significantly reduced as compared with the conventional one.

Further, at the time of normal control, the in-valve release passage is closed by the sub valve element, and therefore, the operation efficiency of the compressor is not reduced.

Further, the sub valve element is opened by the two forces that are the suction pressure Ps (contraction force of the bellows device) and the differential pressure of the crank chamber pressure Pc and the suction pressure Ps, and therefore, the sub valve element can be more reliably opened at the time of actuation of the compressor.

Further, at the time of stopping energization to the electromagnetic actuator, the in-valve release passage is automatically blocked by, for example, the plunger valve section so as not to release the crank chamber pressure Pc to the suction chamber, and therefore, the crank chamber pressure Pc can be quickly increased to a desired pressure and stabilized, whereby the energization stop state can be stably kept.

Further, in order to substantially cancel out the refrigerant pressures which act on the main valve element in the valve closing direction and the valve opening direction, the cancel passage which applies the refrigerant pressure to the main valve element is provided, whereby the load acting on the main valve element due to the refrigerant pressure is substantially eliminated, and therefore, an adverse effect on control by the load can be reduced.

### BRIEF DESCRIPTION OF THE DRAWINGS

FIG. 1 is a vertical sectional view showing a first embodiment (normal control time) of a variable displacement compressor control valve according to the present invention.
FIG. 2 is a vertical sectional view showing the first embodiment (compressor actuation time) of the variable displacement compressor control valve according to the present invention.
FIG. 3 is a view showing a refrigerant pressure flow situation between a compressor and the control valve at the normal control time of the present embodiment.
FIG. 4 is a view showing the refrigerant pressure flow situation between the compressor and the control valve at the compressor actuation time of the present embodiment.
FIG. 5 is a vertical sectional view showing a second embodiment (normal control time) of the variable displacement compressor control valve according to the present invention.
FIG. 6 is a vertical sectional view showing the second embodiment (compressor actuation time) of the variable displacement compressor control valve according to the present invention.
FIG. 7 is a vertical sectional view showing the second embodiment (energization stopping time) of the variable displacement compressor control valve according to the present invention.
FIG. 8 is a view showing a refrigerant pressure flow situation between the compressor and the control valve at the energization stop time of the present embodiment.
FIG. 9 is a vertical sectional view showing a third embodiment of the variable displacement compressor control valve according to the present invention (normal control time).
FIG. 10 is a view showing a refrigerant pressure flow situation between a compressor and a control valve in a conventional example.

### DESCRIPTION OF THE PREFERRED EMBODIMENTS

Hereinafter, embodiments of the present invention will be described with reference to the drawings.

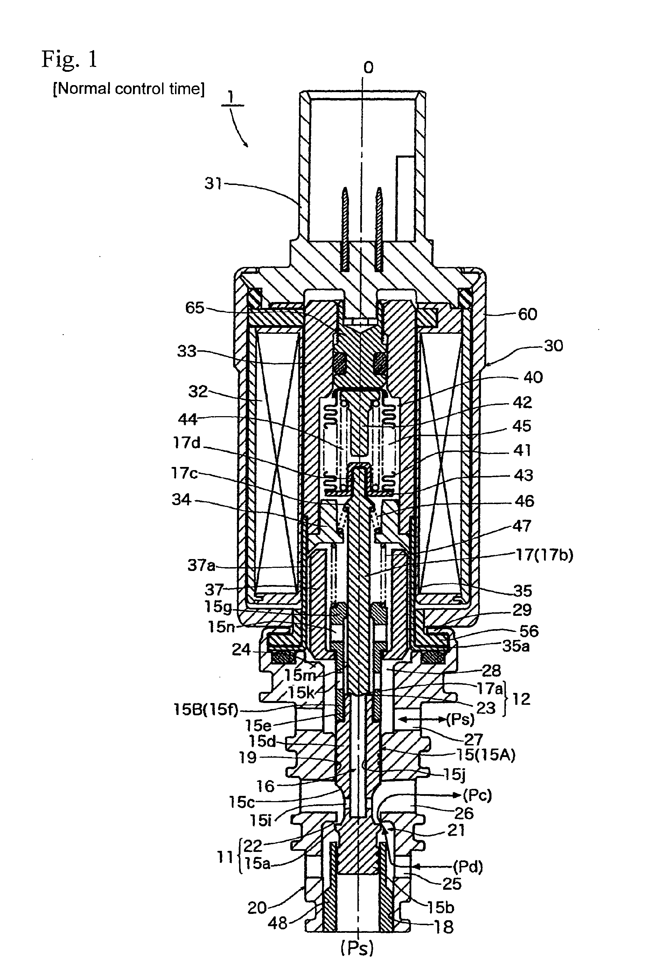

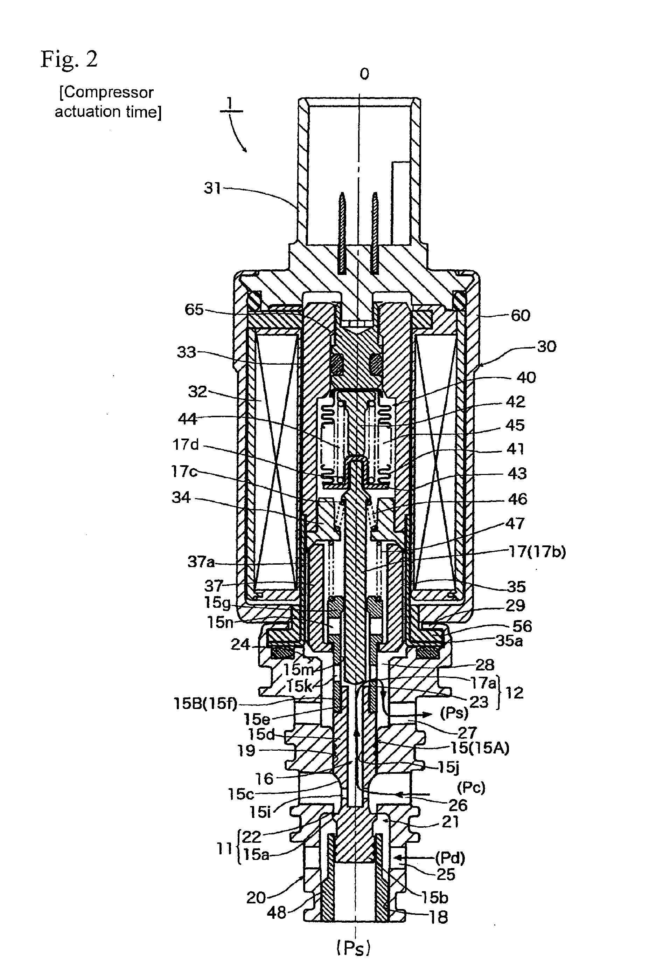

FIGS. 1 and 2 are vertical sectional views showing a first embodiment of a variable displacement compressor control valve according to the present invention. FIG. 1 shows a normal control time, and FIG. 2 shows a compressor actuation time.

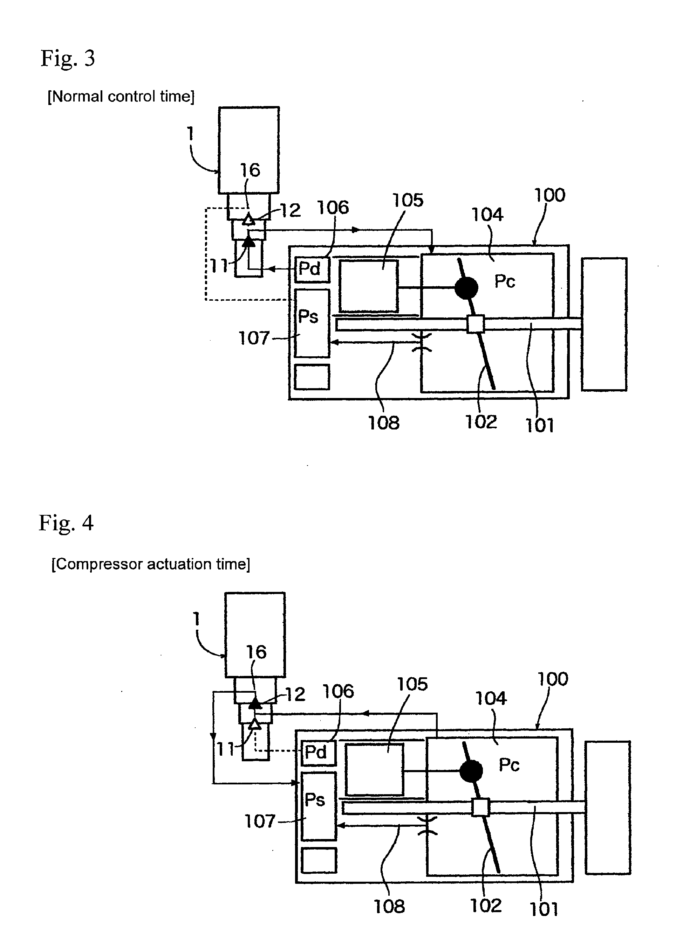

Further, FIGS. 3 and 4 are views corresponding to FIG. 10 showing a conventional example. FIG. 3 shows a refrigerant pressure flow situation between a compressor and a control valve at the normal control time, and FIG. 4 shows the refrigerant pressure flow situation between the compressor and the control valve at the compressor actuation time.

A control valve 1 of the illustrated embodiment includes a valve main body 20 provided with a valve port 22, a main valve element 15 for opening and closing the valve port 22, an electromagnetic actuator 30 for moving the main valve element 15 in a valve port opening/closing direction, and a bellows device 40 as a pressure-sensitive reaction member.

The valve main body 20 has a valve chamber 21 provided with the valve port 22 and a Ps inlet/outlet port 27 which communicates with a suction chamber 107 of a compressor 100, is provided with a Pd introduction port 25 which communicates with a discharge chamber 106 of the compressor 100 at an upstream side (lower side) from the valve port 22, and is provided with a Pc delivery port 26 which communicates with a crank chamber 104 of the compressor 100 at a downstream side (upper side) from the aforesaid valve port 22.

An electromagnetic actuator 30 includes a coil 32 for energization and excitation, a connector head 31 which is mounted on an upper side of the coil 32, a stator 33 and an attractor 34 which are placed at an inner peripheral side of the coil 32, a guide pipe 35 with an upper end portion thereof being joined to outer peripheries of lower end portions (step portions) of the stator 33 and the attractor 34 by TIG welding, a plunger 37 which is placed at an inner peripheral side of the guide pipe 35 under the attractor 34 to be slidable in a vertical direction, a stepped cylindrical housing 60 which is fitted on the aforesaid coil 32 and connector head 31, and a holder 56 which is placed between a lower end portion of the housing 60 and (a flange portion 35a) of the guide pipe 35 to fix the housing 60 and the guide pipe 35 to an upper portion of the valve main body 20.

Further, an adjusting screw 65 with a hexagon socket is screwed onto an upper portion of the aforesaid stator 33, and a pressure-sensitive chamber 45 in which a suction pressure Ps of the compressor 100 is introduced is formed between the aforesaid adjusting screw 65 and the attractor 34 in an inner peripheral side of the stator 33. In the pressure-sensitive chamber 45, a bellows device 40 as a pressure-sensitive member, constituted of a bellows 41, an upper stopper 42 in the shape of an inverted convex, a lower stopper 43 in the shape of an inverted concave, and a compression coil spring 44 is placed. Further, in a concave portion of the above described lower stopper 43, an upper end small-diameter portion 17d of a sub valve element 17 which will be described later is fitted and inserted, and a compression coil spring (sub valve spring) 46 which urges the sub valve element 17 in a contracting direction (direction to compress it to the adjusting screw 65 side) of the bellows device 40 is placed between a large-diameter locking portion 17c (bellows device 40) of the sub valve element 17 and the attractor 34.

The sub valve spring 46 always urges the sub valve element 17 in the contracting direction of the bellows device 40 in order to displace the sub valve element 17 integrally with the bellows device 40. Instead of providing the sub valve spring 46, an upper end of the sub valve element 17 may be fixed to the bellows device 40.

Further, a compression coil spring (valve opening spring) 47 which urges the main valve element 15 and the plunger 37 downward (valve opening direction) is placed between the attractor 34 and an upper end spring bearing portion (plunger 37) of the main valve element 15 which will be described later.

Meanwhile, a stopper portion 24 for restricting the lowest descent position of the plunger 37 is provided at an upper portion of the aforesaid valve main body 20, and a guide hole 19 in which the aforesaid main valve element 15 is slidably fitted and inserted is formed in the vicinity of a central portion of the valve main body 20. Further, an inlet/outlet chamber 28 for the suction pressure Ps of the compressor 100 is formed in an inner periphery of the stopper portion 24 of the valve main body 20, and a plurality of Ps inlet/outlet ports 27 are formed in an outer peripheral side thereof, so that the suction pressure Ps which is introduced into the inlet/outlet chamber 28 from the Ps inlet/outlet ports 27 is introduced into the aforesaid pressure-sensitive chamber 45 through a vertical groove 37a and the like formed in an outer periphery of the plunger 37.

The aforesaid main valve element 15 is constituted of a lower side valve stem member 15A and an upper side cylindrical member 15B. The lower stem-shaped member 15A is constituted of a lower fit insertion portion 15b, a main valve element portion 15a with a diameter larger than the lower fit insertion portion 15b, a small-diameter portion 15c, an upper fit insertion portion 15d, and an upper small-diameter portion 15e in sequence from the lower side, the upper side cylindrical member 15B is constituted of a cylindrical large-diameter guide portion 15g in which a barrel portion 17b of the sub valve element 17 is slidably fitted and inserted, and a lower side cylindrical portion 15f with a diameter smaller than the guide portion 15g, and a lower portion of the lower side cylindrical portion 15f is fitted on and fixed to the upper small-diameter portion 15e by press fit or the like to integrate the lower side valve stem member 15A and the upper side cylindrical member 15B. In this case, a main valve section 11 is constructed by the main valve element portion 15a and the valve port 22.

Further, an insertion hole 18 for inserting the valve element 15 through at the time of assembly is provided in a center of a lower end portion of the valve main body 20, and a cylindrical plug-shaped guide member 48 with a step in which the lower fit insertion portion 15b of the main valve element 15 is slidably fitted and inserted is fixed to the insertion hole 18 by press fit or the like.

Further, a lateral hole 15i opened to the Pc delivery port 26 and a vertical hole 15j are formed in the lower side valve stem member 15A of the main valve element 15, whereas in the upper side cylindrical member 15B, a lateral hole 15k which is opened to the inlet/outlet chamber 28, an inner peripheral hole 15m and a lateral hole 15n are formed, and an in-valve release passage 16 for releasing the pressure Pc of the crank chamber 104 to the suction chamber 107 of the compressor 100 through the Ps inlet/outlet port 27 is constructed by the lateral hole 15i and the vertical hole 15j of the above described lower side valve stem member 15A, the lateral hole 15k of the upper side cylindrical member 15B and the like.

Further, a lower portion of the sub valve element 17 is inserted in the inner peripheral hole 15m of the main valve element 15, and a sub valve element portion 17a in the shape of a conical surface at a lower end of the sub valve element 17 separates from and contacts an upper end edge (sub-valve seat portion 23) of the vertical hole 15j, whereby the aforesaid in-valve release passage 16 is opened and closed. In this case, a sub valve section 12 is constructed by the sub valve element portion 17a and the sub valve seat portion 23.

Accordingly, under the situation where the valve port 22 is closed by the main valve element 15, a contraction force (force to lift up the sub valve element 17) of the bellows device 40 corresponding to the suction pressure Ps acts on the sub valve element 17 in the direction to open the in-valve release passage 16, and a force corresponding to a differential pressure of the crank chamber pressure Pc to push up the sub valve element 17 and the suction pressure Ps to push down the sub valve element 17 acts on the sub valve element 17.

In the control valve 1 constructed as above, at a normal control time (Pd to Pc control time), when the solenoid unit constituted of the coil 32, the stator 33 and the attractor 34 is energized and excited, the plunger 37 is attracted to the attractor 34, and with this, the main valve element 15 is moved upward (valve closing direction) as shown in FIGS. 1 and 3. Meanwhile, the suction pressure Ps which is introduced into the Ps inlet/outlet port 27 from the compressor 100 is introduced into the aforesaid pressure-sensitive chamber 45 from the inlet/outlet chamber 28 through the vertical groove 37a formed in the outer periphery of the plunger 37, the lateral hole 15k, the inner peripheral hole 15m, the lateral hole 15n and the like, the bellows device 40 (vacuum pressure inside) expansively and contractively displaces in accordance with the pressure (suction pressure Ps) of the pressure-sensitive chamber 45 (contracts if the suction pressure Ps is high, expands if it is low), and the displacement is transmitted to the main valve element 15 through the plunger 37 and the sub valve element 17, whereby the valve opening (lift amount of the main valve element portion 15a from the valve port 22) is regulated.

More specifically, the valve opening is determined by the suction force of the plunger 37 by the solenoid unit constituted of the coil 32, the stator 33 and the attractor 34, the urging force (expansion force and contraction force) of the bellows device 40, the urging force by the valve opening spring 47 and the sub valve spring 46, and the force in the valve opening direction and the force in the valve closing direction which act on the main valve element 15. In accordance with the valve opening, the pressure Pc of the crank chamber 104 is regulated, with this, the inclination angle of a swash plate 102 of the compressor 100 and the stroke of a piston 105 of the compressor 100 are regulated, and the discharge capacity is increased or decreased.

In this case, at the time of control of Pd to Pc, the main valve element 15 which moves integrally with the plunger 37 is always urged in the valve closing direction by the solenoid suction force, and therefore, the main valve element 15 displaces integrally with the bellows device 40 via the sub valve element 17. Consequently, the sub valve element portion 17a is in the state in which it is pressed against the sub valve seat portion 23 (valve closing), and therefore, the in-valve release passage 16 is closed. Accordingly, the crank chamber pressure Pc is not released to the suction chamber 107 through the in-valve release passage 16.

In contrast with this, at the time of actuation of the compressor, if the solenoid unit is energized and excited when both the suction pressure Ps and the crank chamber pressure Pc are higher than a set control pressure, the plunger 37 is attracted to the attractor 34, the main valve element 15 is moved upward (valve closing direction) with this, and the valve port 22 is closed by the main valve element portion 15a (main valve section 11 is closed).

Since at this time, two forces to open (lift up/push up) the sub valve element 17, that is, the spring force of the sub valve spring 46 which urges it in the contracting direction of the bellows device 40 and the differential pressure of the crank chamber pressure Pc and the suction pressure Ps are both become large, the sub valve element 17 displaces integrally with the bellows device 40 side, and the in-valve release passage 16 is opened (the sub valve section 12 is opened). Accordingly, even if the liquid refrigerant in the crank chamber 104 is gasified and expanded due to a temperature rise and the crank chamber pressure Pc becomes excessively high, the crank chamber pressure Pc is released to the suction chamber 107 through the in-compressor release passage 108, and in addition, the crank chamber pressure Pc is also released to the suction chamber 107 through the in-valve release passage 16.

As above, in the control valve 1 of the present embodiment, the pressure Pc of the crank chamber 104 is released to the suction chamber 107 through the two passages that are the in-compressor release passage 108 and the in-valve release passage 16 at the time of actuation of the compressor, and therefore, the time which is required until the discharge capacity becomes large at the time of actuation of the compressor can be significantly reduced as compared with the conventional one.

Further, at the normal time (Pd to Pc control time), the in-valve release passage 16 is closed by the sub valve element 17, and therefore, the operation efficiency of the compressor is not reduced.

Further, the sub valve element 17 is opened by the two forces that are the suction pressure Ps (the contraction force of the bellows device 40) and the differential pressure of the crank chamber pressure Pc and the suction pressure Ps (Pc>Ps), and therefore, the sub valve element can be opened more reliably at the time of actuation of the compressor.

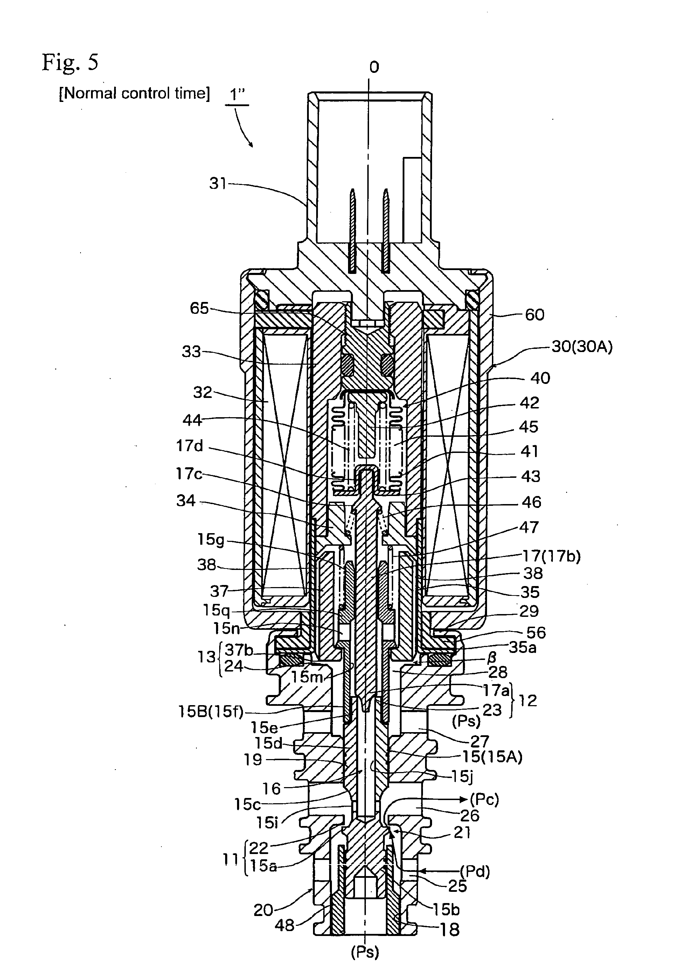

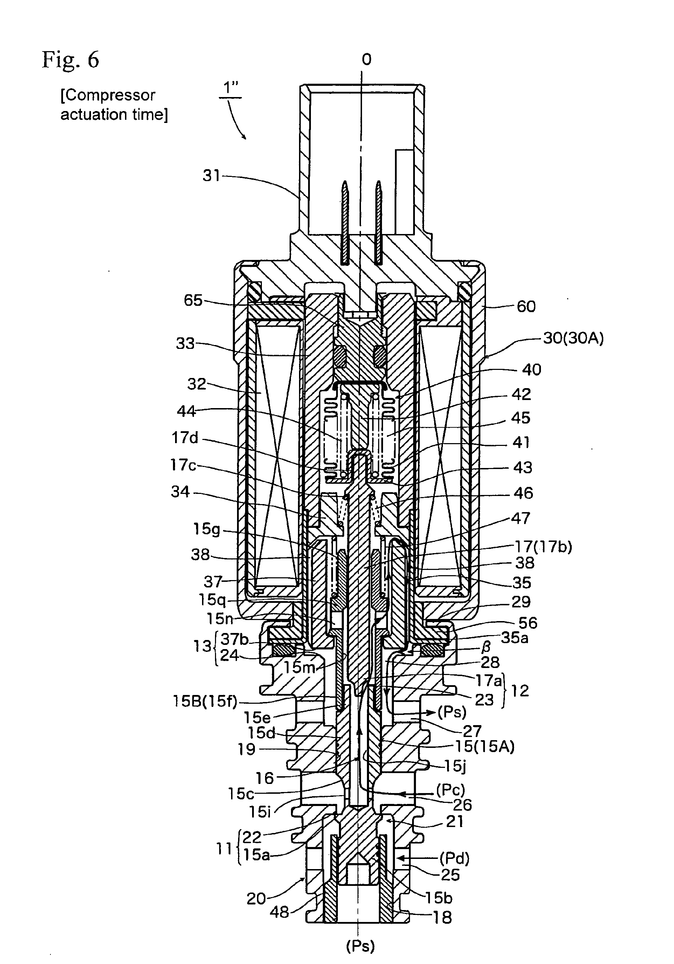

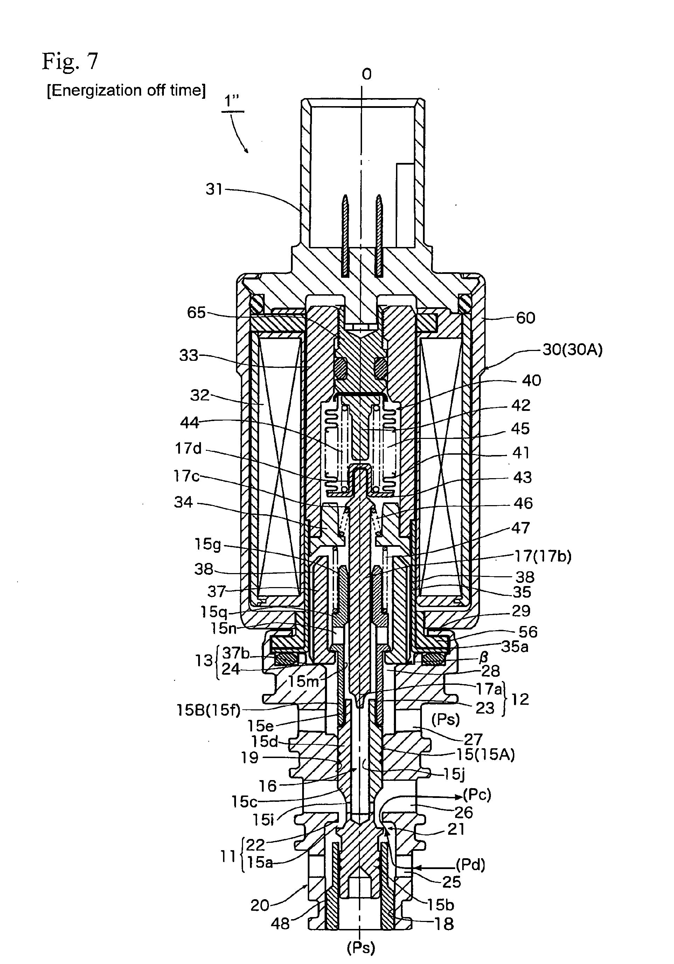

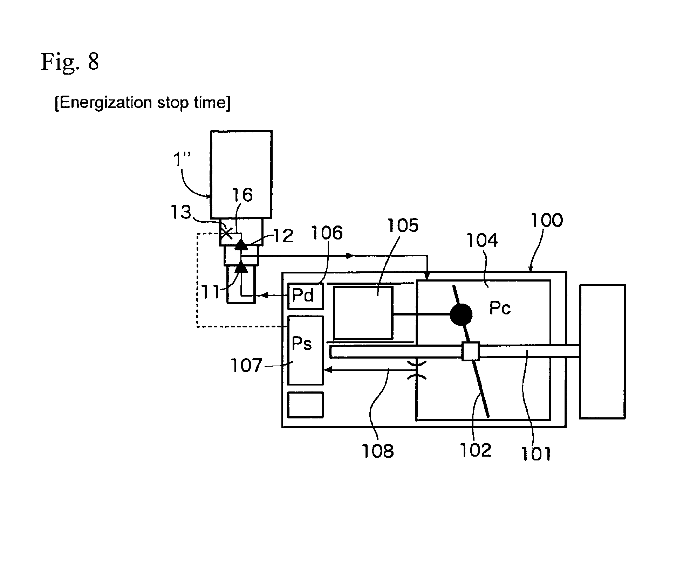

FIGS. 5, 6 and 7 are vertical sectional views showing a second embodiment of the variable displacement compressor control valve according to the present invention. FIG. 5 shows a normal control time, FIG. 6 shows a compressor actuation time, and FIG. 7 shows an energization stop (OFF) time. Further, FIGS. 3, 4 and 8 are views corresponding to FIG. 10 showing a conventional example. FIG. 3 shows the refrigerant pressure flow situation between the compressor and the control valve at the normal control time, FIG. 4 shows the one at the compressor actuation time, and FIG. 8 shows the one at the energization stop (OFF) time.

A control valve 1" of the illustrated embodiment includes a valve main body 20 provided with a valve port 22, a main valve element 15 for opening and closing the valve port 22, an electromagnetic actuator 30 for moving the main valve element 15 in a valve port opening/closing direction, and a bellows device 40 as a pressure-sensitive reaction member.

The valve main body 20 has a valve chamber 21 provided with the valve port 22 and a Ps inlet/outlet port 27 which communicates with a suction chamber 107 of a compressor 100, is provided with a Pd introduction port 25 which communicates with a discharge chamber 106 of the compressor 100 at an upstream side (lower side) from the valve port 22, and is provided with a Pc inlet/outlet port 26 which communicates with a crank chamber 104 of the compressor 100 at a downstream side (upper side) from the aforesaid valve port 22.

An electromagnetic actuator 30 includes a coil 32 for energization and excitation, a connector head 31 which is mounted on an upper side of the coil 32, a stator 33 and a attractor 34 which are placed at an inner peripheral side of the coil 32, a guide pipe 35 with an upper end portion thereof being joined to outer peripheries of lower end portions (step portions) of the stator 33 and the attractor 34 by TIG welding, a plunger 37 which is placed at an inner peripheral side of the guide pipe 35 under the attractor 34 to be slidable in a vertical direction, a stepped cylindrical housing 60 which is fitted on the aforesaid coil 32 and connector head 31, and a holder 56 which is placed between a lower end portion of the housing 60 and (the flange portion 35a) of the guide pipe 35 to fix the housing 60 and the guide pipe 35 to an upper portion of the valve main body 20. In this case, the portion which is constituted of the coil 32, the stator 33, the attractor 34 and the like except for the plunger 37, of the electromagnetic actuator 30 will be called a solenoid unit 30A.

Further, an adjusting screw 65 with a hexagon socket is screwed onto an upper portion of the aforesaid stator 33, and a pressure-sensitive chamber 45 in which a suction pressure Ps of the compressor 100 is introduced is formed between the aforesaid adjusting screw 65 and the attractor 34 in an inner peripheral side of the stator 33. In the pressure-sensitive chamber 45, a bellows device 40 as a pressure-sensitive reaction member, constituted of a bellows 41, an upper stopper 42 in the shape of an inverted convex, a lower stopper 43 in the shape of an inverted concave, and a compression coil spring 44 is placed. Further, in a concave portion of the above described lower stopper 43, an upper end small-diameter portion 17d of a sub valve element 17 which will be described later is fitted and inserted, and a compression coil spring (sub valve spring) 46 which urges the sub valve element 17 in a contracting direction (direction to compress it to the adjusting screw 65 side) of the bellows device 40 is placed between a large-diameter locking portion 17c (bellows device 40) of the sub valve element 17 and the attractor 34.

The sub valve spring 46 always urges the sub valve element 17 in the contracting direction of the bellows device 40 in order to displace the sub valve element 17 integrally with the bellows device 40. Instead of providing the sub valve spring 46, an upper end (small-diameter portion 17d) of the sub valve element 17, for example, may be fixed to a lower stopper 43 of the bellows device 40.

Further, a compression coil spring (valve opening spring) 47 which urges the main valve element 15 and the plunger 37 downward (valve opening direction) is placed between the attractor 34 and a large-diameter locking portion 15q (plunger 37) of the main valve element 15 which will be described later.

Meanwhile, a stopper surface 24 for restricting the lowest descent position of the plunger 37 is provided at an upper portion of the aforesaid valve main body 20. A plunger valve section 13 which blocks an in-valve release passage 16 which will be described later is constructed by the stopper surface 24 and a bottom surface 37b of the plunger 37 (details will be described later).

A guide hole 19 in which the aforesaid main valve element 15 is slidably fitted and inserted is formed in the vicinity of a central portion of the valve main body 20. Further, an inlet/outlet chamber 28 for the suction pressure Ps of the compressor 100 is formed in an inner periphery of an upper portion of the valve main body 20, a plurality of Ps inlet/outlet ports 27 are formed in an outer peripheral side thereof, so that the suction pressure Ps which is introduced into the inlet/outlet chamber 28 from the Ps inlet/outlet ports 27 is introduced into the aforesaid pressure-sensitive chamber 45 via vertical grooves 38 (two spots on the left and the right) and the like formed in an outer periphery of the plunger 37.

The aforesaid main valve element 15 is constituted of a lower side valve stem member 15A and an upper side cylindrical member 15B. The lower side stem-shaped member 15A is constituted of a lower fit insertion portion 15b, a main valve element portion 15a with a diameter larger than the lower fit insertion portion 15b, a small-diameter portion 15c, an upper fit insertion portion 15d, and an upper small-diameter portion 15e in sequence from the lower side, the upper side cylindrical member 15B is constituted of a fit insertion portion 15g with a large-diameter locking portion 15q in which a barrel portion 17b of the sub valve element 17 is slidably fitted and inserted, and a lower side cylindrical portion 15f with an inside diameter larger than the fit insertion portion 15g, and a lower portion of the lower side cylindrical portion 15f is fitted on and fixed to the upper small-diameter portion 15e by press fit or the like to integrate the lower side valve stem member 15A and the upper side cylindrical member 15B. In this case, a main valve section 11 is constructed by the main valve element portion 15a and the valve port 22.

Further, an insertion hole 18 for inserting the valve stem 15 through at the time of assembly is provided in a center of a lower end portion of the valve main body 20, and a cylindrical plug-shaped guide member 48 with a step in which the lower fit insertion portion 15b of the main valve element 15 is slidably fitted and inserted is fixed to the insertion hole 18 by press fit or the like.

Further, a lateral hole 15i opened to the Pc inlet/outlet port 26 and a vertical hole 15j are formed in the lower side valve stem member 15A of the main valve element 15, whereas in the upper side cylindrical member 15B, an inner peripheral hole 15m is formed, and a lateral hole 15n is formed to connect to the aforesaid inner peripheral hole 15m, in the large-diameter locking portion 15q located in the plunger 37.

Here, in the present embodiment, the in-valve release passage 16 for releasing the pressure Pc of the crank chamber 104 to the suction chamber 107 of the compressor 100 through the Ps inlet/outlet port 27 is constructed by the lateral hole 15i and the vertical hole 15j of the lower side valve stem member 15A, the inner peripheral hole 15m and the lateral hole 15n of the upper side cylindrical member 15B, an inside of the plunger 37, vertical grooves 38 which are formed in the outer periphery of the plunger 37, a gap β which is formed between the bottom surface of the plunger and the stopper surface 24 provided at the aforesaid valve main body 20, the inlet/outlet chamber 28 and the like.

Further, a lower portion of the sub valve element 17 is inserted in the inner peripheral hole 15m of the main valve element 15, and a sub valve element portion 17a in the shape of a conical surface at a lower end of the sub valve element 17 separates from and contacts an upper end edge (sub-valve seat portion 23) of the vertical hole 15j, whereby the aforesaid in-valve release passage 16 is opened and closed in the main valve element 15. In this case, a sub valve section 12 is constructed by the sub valve element portion 17a and the sub valve seat portion 23.

Accordingly, under the situation where the valve port 22 is closed by the main valve element 15, a contraction force (force to lift up the sub valve element 17) of the bellows device 40 corresponding to the suction pressure Ps acts on the sub valve element 17 in the direction to open the in-valve release passage 16, and a force corresponding to a differential pressure of the crank chamber pressure Pc to push up the sub valve element 17 and the suction pressure Ps to push down the sub valve element 17 acts on the sub valve element 17.

Meanwhile, the in-valve release passage 16 is also blocked by the bottom surface 37b of the plunger 37 being pressed against the stopper surface 24 provided at the valve main body 20. More specifically, when energization to the solenoid unit 30A of the electromagnetic actuator 30 is stopped, the solenoid unit 30A does not have the suction force, and therefore, the plunger 37 is pressed against the stopper surface 24 in the state in which the plunger 37 is pressed and locked to the large-diameter locking portion 15q of the main valve element 15 by the urging force of the valve opening spring 47. Thereby, the aforesaid gap β is eliminated, and the in-valve release passage 16 is automatically blocked.

In the control valve 1" constructed as above, at a normal control time (Pd to Pc control time), when the solenoid unit 30A constituted of the coil 32, the stator 33, the attractor 34 and the like is energized and excited, the plunger 37 is attracted to the attractor 34, and with this, the main valve element 15 is moved upward (valve closing direction) as shown in FIGS. 4 and 7. Meanwhile, the suction pressure Ps which is introduced into the Ps inlet/outlet port 27 from the compressor 100 is introduced into the aforesaid pressure-sensitive chamber 45 from the inlet/outlet chamber 28 through the vertical grooves 38 formed in the outer periphery of the plunger 37, and the like, the bellows device 40 (vacuum pressure inside) expansively and contractively displaces in accordance with the pressure (suction pressure Ps) of the pressure-sensitive chamber 45 (contracts if the suction pressure Ps is high, expands if it is low), and the displacement is transmitted to the main valve element 15 through the plunger 37 and the sub valve element 17, whereby the valve opening (lift amount of the main valve element portion 15a from the valve port 22) is regulated.

More specifically, the valve opening is determined by the suction force of the plunger 37 by the solenoid unit 30A constituted of the coil 32, the stator 33, the attractor 34 and the like, the urging force (expansion force and contraction force) of the bellows device 40, the urging force by the valve opening spring 47 and the sub valve spring 46, and the force in the valve opening direction and the force in the valve closing direction which act on the main valve element 15. In accordance with the valve opening, the pressure Pc of the crank chamber 104 is regulated, with this, the inclination angle of a swash plate 102 and the stroke of a piston 105 of the compressor 100 are regulated, and the discharge capacity is increased or decreased.

In this case, at the time of control of Pd to Pc, the main valve element 15 which moves integrally with the plunger 37 is always urged in the valve closing direction by the suction force of the solenoid unit 30A, and therefore, the main valve element 15 displaces integrally with the bellows device 40 via the sub valve element 17. As a result, the sub valve element portion 17a is in the state in which it is pressed against the sub valve seat portion 23 (sub valve section 12 is closed), and therefore, the in-valve release passage 16 is blocked in the main valve element 15. Accordingly, the crank chamber pressure Pc is not released to the suction chamber 107 through the in-valve release passage 16.

In contrast with this, at the time of actuation of the compressor, if the solenoid unit 30A is energized and excited when both the suction pressure Ps and the crank chamber pressure Pc are higher than a set control pressure, the plunger 37 is attracted to the attractor 34, the main valve element 15 is moved upward (valve closing direction) with this, and the valve port 22 is closed by the main valve element portion 15a (main valve section 11 is closed). Since at this time, two forces to open (lift up/push up) the sub valve element 17, that is, the spring force (force corresponding to the suction pressure Ps) of the sub valve spring 46 which urges it in the contracting direction of the bellows device 40 and the differential pressure of the crank chamber pressure Pc and the suction pressure Ps are both become large, the sub valve element 17 displaces integrally with the bellows device 40, and the in-valve release passage 16 is opened (the sub valve section 12 is opened). Accordingly, even if the liquid refrigerant in the crank chamber 104 is vaporized and expanded due to a temperature rise and the crank chamber pressure Pc becomes excessively high, the crank chamber pressure Pc is released to the suction chamber 107 through the in-compressor release passage 108, and in addition, the crank chamber pressure Pc is also released to the suction chamber 107 through the in-valve release passage 16.

As above, in the control valve 1" of the present embodiment, the pressure Pc of the crank chamber 104 is released to the suction chamber 107 through the two passages that are the in-compressor release passage 108 and the in-valve release passage 16 at the time of actuation of the compressor, and therefore, the time which is required until the discharge capacity becomes large at the time of actuation of the compressor can be significantly reduced as compared with the conventional one.

Further, at the normal time (Pd to Pc control time), the in-valve release passage 16 is closed by the sub valve element 17, and therefore, the operation efficiency of the compressor is not reduced.

Further, the sub valve element 17 is opened by the two forces that are the suction pressure Ps (the contraction force of the bellows device 40) and the differential pressure of the crank chamber pressure Pc and the suction pressure Ps (Pc>Ps), and therefore, the sub valve element can be opened more reliably at the time of actuation of the compressor.

In addition to the above description, since if energization to the solenoid unit 30A is stopped (OFF), the solenoid unit 30A does not have a suction force, the plunger 37 is pressed against the stopper surface 24 in the state in which the plunger 37 is pressed and locked to the large-diameter locking portion 15q of the main valve element 15 by the urging force of the valve opening spring 47, the main valve section 11 is brought into a fully opened state, the sub valve section 12 is also likely to open, and the crank chamber pressure Pc is likely to be released to the suction chamber 107 through the in-valve release passage 16, whereas in the present embodiment, the bottom surface 37b of the plunger 37 is pressed against the stopper surface 24 to eliminate the aforesaid gap β which constructs a part of the in-valve release passage 16 (the plunger valve section 13 is closed), and therefore, the in-valve release passage 16 is automatically blocked, as shown in FIGS. 3 and 6.

As above, at the time of stopping (OFF) of energization to the solenoid unit 30A, the in-valve release passage 16 is automatically blocked by the plunger valve section 13, and the crank chamber pressure Pc is not released to the suction chamber 107, whereby the crank chamber pressure Pc can be quickly increased to a predetermined pressure and stabilized, and thereby the energization stop (OFF) state can be stably kept.

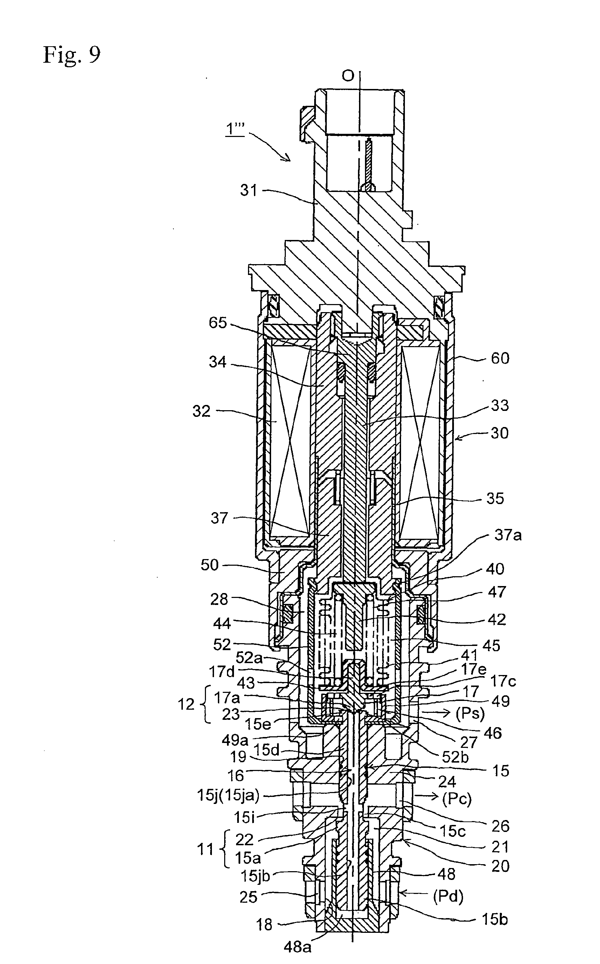

FIG. 9 is a sectional view showing a third embodiment of the variable displacement compressor control valve according to the present invention. A control valve 1''' shown in the drawing includes the electromagnetic actuator 30, the valve main body 20, the main valve element 15 which is slidably fitted and inserted in the valve main body 20, and the bellows device 40 as a pressure-sensitive reaction member.

The electromagnetic actuator 30 includes the coil 32 for energization and excitation, the connector head 31 which is mounted on an upper side of the coil 32, the cylindrical attractor 34 (stator) which is placed at an inner peripheral side of the coil 32, the stepped guide pipe 35 in a stepped shape with an upper end portion thereof being joined to an outer periphery of a lower end portion (step portion) of the attractor 34 by TIG welding, the plunger 37 which is placed at an inner peripheral side of the stepped guide pipe 35 under the attractor 34 to be movable in a vertical direction, the stepped cylindrical housing 60 which is fitted on the coil 32 and the connector head 31, and the holder 50 which is placed between a lower end portion of the housing 60 and the stepped guide pipe 35 to fix the housing 60 and the guide pipe 35 to an upper portion of the valve main body 20.

The adjusting screw 65 with a hexagon socket is screwed onto an upper portion of the attractor 34. The adjusting screw 65 is in the shape of an elongated rod, vertically extends through the attractor 34 and the plunger 37, and has its lower end portion abutting on the upper stopper 42 which will be described later.

The valve main body 20 has the valve chamber 21 provided with the valve seat (valve port) 22 which the valve element portion 15a of the main valve element 15 comes into contact with and separates from, a plurality of Pd introduction ports 25 for introducing the refrigerant with a discharge pressure Pd from the compressor are provided at an outer peripheral portion (lower side from the valve seat 22) of the valve chamber 21, the convex-shaped stopper portion 24 for restricting the lowest descent position of the plunger 37 is provided at the upper side of the valve seat 22. Further, the insertion hole 18 for inserting the main valve element 15 through at the time of assembly is provided in a center of a lower end portion of the valve main body 20, and a cylindrical stepped plug-shaped guide member 48 with a bottom in which the lower fit insertion portion 15b at the lower end side of the main valve element 15 is slidably fitted and inserted is fixed to the insertion hole 18 by press fit or the like. A pressure chamber 48a is formed between an inner bottom surface of the plug-shaped guide member 48 and the lower end portion (lower fit insertion portion) 15b of the main valve element 15. Further, the Ps inlet/outlet port 27 and the inlet/outlet chamber 28 of the inlet pressure Ps are provided at the upper side of the convex-shaped stopper portion 24 in the valve main body 20.

The main valve element 15 is slidably fitted and inserted in the guide hole 19 which is formed in the convex-shaped stopper portion 24, and has the lower fit insertion portion 15b, the main valve element portion 15a with a diameter larger than the lower fit insertion portion 15b, the small-diameter portion 15c, the upper fit insertion portion 15d, and the mushroom-shaped head portion 15e in sequence from the lower side. The main valve element portion 15a and the valve port 22 constitute the main valve section 11.

Further, a lateral hole 15i communicating with the Pc introduction port 26 and a vertical hole 15j vertically crossing the main valve element 15 are formed inside the main valve element 15. The in-valve release passage 16 for releasing the pressure Pc of the crank chamber 104 to the suction chamber 107 of the compressor 100 through the Ps inlet/outlet port 27 is constituted of a portion 15ja at an upper side from the lateral hole 15i in the vertical hole 15j, and the lateral hole 15i. Further, a lower end of the vertical hole 15j communicates with the pressure chamber 48a of the plug-shaped guide member 48, and a cancel passages which applies a downward refrigerant pressure to the main valve element 15 is constituted of a portion 15jb (in-valve cancel passage) at a lower side from the lateral hole 15i in the vertical hole 15j, and the pressure chamber 48a.

Further, in the present embodiment, in order to directly connect the plunger 37 and the main valve element 15, a bottomed cylindrical connection cylinder body (connection member) 52 formed of a plate material is included, and the bellows device 40 is housed in the pressure-sensitive chamber 45 formed in the connection cylinder body 52. The connection cylinder body 52 is provided with a plurality of through holes 52a, and the suction pressure Ps which is introduced into the inlet/outlet chamber 28 is introduced into the pressure-sensitive chamber 45 via the through-holes 52a.

In more detail, in the connection cylinder body 52, an upper portion thereof is crimped and fixed to the annular groove 37a formed on the outer periphery of the lower portion of the plunger 37, and a bottomed cylindrical spring bearing 49 is fixed to a center of an inner surface of a bottom portion 52b thereof. A locking hole 49a for locking the mushroom-shaped head portion 15e in the main valve element 15 is formed in a bottom portion of the spring bearing 49. The locking hole 49a is formed into a potbellied shape in plane view formed by a small-diameter portion and a large-diameter portion, so that after the mushroom-shaped head portion 15e is penetrated through the large-diameter portion from the lower side, the main valve element 15 is moved in the diameter direction, whereby the annular groove formed at the lower side of the mushroom-shaped portion 15e is engaged with the small-diameter portion and the main valve element 15 is locked. Thereby, the plunger 37 and the main valve element 15 are directly connected via the connection cylinder body 52, and they are integrally moved vertically.

The sub valve element 17 with a substantially cross-shaped section is housed in the spring bearing 49 to be slidable vertically. A conical sub valve element portion 17a is formed at a lower end of the sub valve element 17, and the sub valve element portion 17a separates from and contacts an upper end edge (sub valve seat portion 23) of the vertical hole 15j, whereby the in-valve release passage 16 is opened and closed. More specifically, the sub valve section 12 is constituted of the sub valve element portion 17a and the sub valve seat portion 23.

The flange-shaped large-diameter locking portion 17c is formed in the intermediate portion of the sub valve element 17, the compression coil spring (sub valve spring) 46 which urges the sub valve element 17 in the contracting direction of the bellows device 40 is placed between the large-diameter locking portion 17c and the spring bearing 49. A plurality of through holes 17e which allow the refrigerant to pass through are formed in the large-diameter locking portion 17c. The small-diameter portion 17d is formed at the upper portion of the sub valve element 17.

The sub valve spring 46 always urges the sub valve element 17 in the contracting direction of the bellows device 40 to displace the sub valve element 17 integrally with the bellows device 40. Instead of providing the sub valve spring 46, for example, the upper end (small-diameter portion 17d) of the sub valve element 17 may be fixed to the lower stopper 43 (described later) of the bellows device 40.

Under the circumstances in which the valve port 22 is closed by the main valve element 15, the contraction force (force to lift up the sub valve element 17) of the bellows device 40 corresponding to the suction pressure Ps works on the sub valve element 17 in the direction to open the in-valve release passage 16, and a force corresponding to the differential pressure of the crank chamber pressure Pc to push up the sub valve element 17 and the suction pressure Ps to push down the sub valve element 17 works on the sub valve element 17.

The bellows device 40 which is placed in the connection cylinder body 52 includes the bellows 41 as the pressure-sensitive reaction member, the upper stopper 42 in the shape of an inverted convex, the lower stopper 43 in the shape of an inverted concave, the compression coil spring 44, the cylindrical spring bearing 49 and the like, and a space which is formed in the connection cylinder body 52 becomes a pressure-sensitive chamber 45. An upper end surface (upper stopper 42) of the bellows device 40 is caused to abut on the adjusting screw 65, and the small-diameter portion 17d of the sub valve element 17 is inserted in and abuts on the lower stopper 43.

In the control valve 1 with the above constitution, when the plunger 37 is attracted to the attractor 34 (energizing time), the main valve element 15 is forcefully pulled by the plunger 37 via the connection cylinder body 52 in the valve closing direction. Meanwhile, the suction pressure Ps which is introduced into the suction pressure introduction port 27 from the compressor is introduced into the pressure-sensitive chamber 45, the bellows device 40 (vacuum pressure inside) is extensively and contractively displaced in accordance with the pressure (suction pressure Ps) of the pressure-sensitive chamber 45 (contracts if the suction pressure Ps is high, extends if it is low), and the displacement is transmitted to the main valve element 15, whereby the valve opening is regulated.

More specifically, the valve opening is determined by the suction force of the plunger 37 by the attractor 34, the urging force of the bellows device 40, and the urging force by the compression coil spring 46, and in accordance with the valve opening, the delivery amount (restriction amount) to the Pc delivery port 26 side which is the outlet of the refrigerant with the discharge pressure Pd which is introduced into the valve chamber 21 from the Pd introduction port 25, that is, the crank chamber is regulated, whereby the pressure Pc in the crank chamber is controlled.

In this case, the main valve element 15 which moves integrally with the plunger 37 is always urged in the valve closing direction by the solenoid suction force at the time of Pd→Pc control, and therefore, the main valve element 15 displaces integrally with the bellows device 40 via the sub valve element 17. Consequently, the sub valve element portion 17a is in the state in which it is pressed against the sub valve seat portion 23 (valve closing), and therefore, the in-valve release passage 16 is closed. Consequently, the crank chamber pressure Pc is not released to the suction chamber 107 through the in-valve release passage 16.

In contrast with this, at the time of actuation of the compressor, when the suction pressure Ps and the crank chamber pressure Pc are both higher than the set control pressure, if the solenoid portion is energized and excited, the plunger 37 is attracted to the attractor 34. With this, the main valve element 15 is moved upward (valve closing direction), and the valve port 22 is closed by the main valve element portion 15a (the main valve section 11 is closed).

At this time, two forces which open (lift up/push up) the sub valve element 17, that is, the spring force of the sub valve spring 46 which urges in the contracting direction of the bellows device 40, and the differential pressure of the crank chamber pressure Pc and the suction pressure Ps both increase. Therefore, the sub valve element 17 displaces integrally with the bellows device 40 side, and the in-valve release passage 16 is opened (the sub valve section 12 is opened). Consequently, even if the liquid refrigerant in the crank chamber 104 is vaporized and expanded due to increase in temperature, and the crank chamber pressure Pc becomes excessive, the crank chamber pressure Pc is released to the suction chamber 107 through the in-compressor release passage 108, and in addition, the crank chamber pressure Pc is released to the suction chamber 107 through the in-valve release passage 16.

As above, in the control valve 1 of the present embodiment, the pressure Pc of the crank chamber 104 is released to the suction chamber 107 through the two passages that are the in-compressor release passage 108 and the in-valve release passage 16 at the time of actuation of the compressor, and therefore, the time required until the discharge capacity becomes large can be significantly reduced at the time of actuation of the compressor, as compared with the conventional one.

In the present embodiment, the cancel passage constituted of the portion 15jb at the lower side from the lateral hole 15i in the vertical hole 15j, and the compression chamber 48a is provided, whereby the adverse effect exerted by the refrigerant pressure, which acts on the main valve element 15, on control (causing reduction in control precision and the like) can be reduced.

More specifically, in the control valve 1''', the Pd introduction port 25 is provided at the upstream side from the valve port 22, while the Pc delivery port 26 is provided at the downstream side from the valve port 22, and the main valve element portion 15a opens and closes the valve port 22 from the lower side thereof. In this case, the discharge pressure Pd acts upward on the main valve element portion 15a of the main valve element 15 from the lower side thereof, and the crank chamber pressure Pc acts downward on the main valve element portion 15a from the upper side. Since Pc<Pd is satisfied, the differential pressure (Pd-Pc) acts upward on the main valve element portion 15a.

Further, the discharge pressure Pd acts downward on the outer peripheral portion of the lower fit insertion portion 15b of the main valve element 15 which is housed in the plug-shaped guide member 48, while the crank chamber pressure Pc which is supplied by the aforesaid cancel passage acts upward on the lower end surface of the lower fit insertion portion 15b, and therefore, the differential pressure (Pd-Pc) acts downward on the lower fit insertion portion 15b. The differential pressure (Pd-Pc) and the differential pressure (Pd-Pc) which acts upward on the main valve element portion 15a cancel out each other, and therefore, (Pd-Pc) which acts on the main valve element 15 is cancelled.

The crank chamber pressure Pc acts upward on the outer peripheral portion at the upper side potion from the lateral hole 15i in the main valve element 15, but the crank chamber pressure Pc is substantially cancelled out by the suction pressure Ps which acts downward on the upper end of the main valve element 15 (Pc ≈ Ps). Accordingly, the load which acts on the main valve element 15 due to the refrigerant pressure is substantially eliminated, and therefore, the adverse effect on control due to the load can be reduced.

Further, in the present embodiment, the hole 15ja which constitutes the in-valve release passage 16 and the in-valve cancel passage 15jb are formed by one through hole (vertical hole 15j), and therefore, the advantage of facilitating manufacture is provided.

The structure of the present embodiment (the cancel passage which applies the refrigerant pressure to the main valve element 15 in order to substantially cancel out the refrigerant pressures acting on the main valve element 15 in the valve closing direction and the valve opening direction) can be provided in the control valve with the structure as in the second embodiment (the structure which blocks the in-valve release passage by pressing the bottom surface of the plunger against the stopper surface at the time of stopping energization to the electromagnetic actuator).

### DESCRIPTION OF SYMBOLS

- 1, 1', 1", 1''': VARIABLE DISPLACEMENT COMPRESSOR CONTROL VALVE
- 11: MAIN VALVE SECTION
- 12: SUB VALVE SECTION
- 13: PLUNGER VALVE SECTION
- 15: MAIN VALVE ELEMENT
- 15A: LOWER SIDE STEM-SHAPED MEMBER
- 15B: UPPER SIDE CYLINDRICAL MEMBER
- 15j: VERTICAL HOLE (THROUGH HOLE)
- 15jb: IN-VALVE CANCEL PASSAGE
- 16: IN-VALVE RELEASE PASSAGE
- 17: SUB VALVE ELEMENT
- 19: GUIDE HOLE
- 20: VALVE MAIN BODY
- 21: VALVE CHAMBER
- 22: VALVE PORT
- 24: STOPPER SURFACE
- 25: Pd INTRODUCTION PORT
- 26: Pc INLET/OUTLET PORT
- 27: Ps INLET/OUTLET PORT
- 30: ELECTROMAGNETIC ACTUATOR
- 30A: SOLENOID UNIT
- 40: BELLOWS DEVICE
- 48a: PRESSURE CHAMBER

## Claims

1. A variable displacement compressor control valve comprising a valve main body which has a valve chamber provided with a valve port and a Ps inlet/outlet port communicating with a suction chamber of a compressor, is provided with a Pd introduction port communicating with a discharge chamber of the compressor at an upstream side from the valve port, and is provided with a Pc delivery port communicating with a crank chamber of the compressor at a downstream side from the valve port, a main valve element for opening and closing the valve port, an electromagnetic actuator having a plunger for moving the main valve element in a valve port opening/closing direction, a pressure-sensitive chamber into which a suction pressure Ps is introduced from the compressor through the Ps inlet/outlet port, and a pressure-sensitive reaction member which urges the main valve element in the valve port opening/closing direction in accordance with a pressure of the pressure-sensitive chamber,
wherein an in-valve release passage for releasing a pressure Pc of the crank chamber to a suction chamber of the compressor through the Ps inlet/outlet port is provided, and a sub valve element which opens and closes the in-valve release passage is provided, and
wherein under a situation in which the valve port is closed by the main valve element, two forces that are a force corresponding to the suction pressure Ps and a force corresponding to a differential pressure between the crank chamber pressure Pc and the suction pressure Ps act on the sub valve element in a direction to open the in-valve release passage.

2. The variable displacement compressor control valve according to claim 1,
wherein in the main valve element, the in-valve release passage is formed, and a sub valve element portion of the sub valve element is inserted.

3. The variable displacement compressor control valve according to claim 1 or 2,
wherein the valve main body is provided with a guide hole in which the main valve element is slidably fitted and inserted, the Pc delivery port is provided between the guide hole and the valve port, and the Ps inlet/outlet port is provided at an upper side of the guide hole.

4. A variable displacement compressor control valve comprising a valve main body which has a valve chamber provided with a valve port and a Ps inlet/outlet port communicating with a suction chamber of a compressor, is provided with a Pd introduction port communicating with a discharge chamber of the compressor at an upstream side from the valve port, and is provided with a Pc inlet/outlet port communicating with a crank chamber of the compressor at a downstream side from the valve port, a main valve element for opening and closing the valve port, an electromagnetic actuator having a plunger for moving the main valve element in a valve port opening/closing direction, a pressure-sensitive chamber into which a suction pressure Ps is introduced from the compressor through the Ps inlet/outlet port, and a pressure-sensitive reaction member which urges the main valve element in the valve port opening/closing direction in accordance with a pressure of the pressure-sensitive chamber,
wherein an in-valve release passage for releasing a pressure Pc of the crank chamber to a suction chamber of the compressor through the Ps inlet/outlet port when the electromagnetic actuator is energized, and the valve port is closed by the main valve element, is provided, and the in-valve release passage is constructed by including an inside of the main valve element, an inside of the plunger, and a gap formed between a bottom surface of the plunger and a stopper surface provided at the valve main body, and at a time of stopping energization to the electromagnetic actuator, the in-valve release passage is blocked by pressing the bottom surface of the plunger against the stopper surface.

5. The variable displacement compressor control valve according to claim 4,
wherein the in-valve release passage is constructed by including a vertical groove formed in an outer peripheral portion of the plunger.

6. The variable displacement compressor control valve according to claim 4,
wherein a sub valve element for opening and closing the in-valve release passage in the main valve element is provided, and when the valve port is closed by the main valve element, two forces that are a force corresponding to the suction pressure Ps and a force corresponding to a differential pressure between the crank chamber pressure Pc and the suction pressure Ps act on the sub valve element in a direction to open the in-valve release passage.

7. The variable displacement compressor control valve according to any one of claims 4 to 6,
wherein the valve main body is provided with a guide hole in which the main valve element is slidably fitted and inserted, the Pc inlet/outlet port is provided between the guide hole and the valve port, and the Ps inlet/outlet port is provided at an upper side of the guide hole.

8. The variable displacement compressor control valve according to claim 1 or 4,
wherein a cancel passage which applies a refrigerant pressure to the main valve element is provided to substantially cancel out refrigerant pressures acting on the main valve element in a valve closing direction and a valve opening direction.

9. The variable displacement compressor control valve according to claim 8,
wherein the cancel passage includes an in-valve cancel passage which is formed in the main valve element, opens at an end surface at an upstream side from the valve port in the main valve element and communicates with the Pc delivery port, and a pressure chamber which is opposed to the end surface of the main valve element and communicates with the in-valve cancel passage.

10. The variable displacement compressor control valve according to claim 9,
wherein the in-valve release passage and the in-valve cancel passage which are formed in the main valve element are formed by one through hole which penetrates through the main valve element.
